# EUROPEAN PATENT APPLICATION

(11) **EP 4 258 129 A1**
(43) Date of publication of application: **11.10.2023**
(21) Application number: 21901016.2
(22) Date of filing: 02.12.2021
(51) Int. Cl.: G06F 16/2458, G06F 16/27, G06F 16/29, G06F 16/182

(54) **DATA SHARDING SYSTEM, DATA SHARDING METHOD, AND PROGRAM STORED IN RECORDING MEDIUM**

(30) Priority: 04.12.2020 KR 20200168822; 04.12.2020 KR 20200168837
(71) Applicant: Kim, Geun Seok, Seoul 05270 (KR)
(72) Inventor: Kim, Geun Seok, Seoul 05270 (KR)
(74) Representative: Gulde & Partner
(86) International application number: PCT/KR2021/018051
(87) International publication number: WO 2022/119328

(57) **Abstract**

A data sharding system according to an embodiment of the present invention comprises: a server that receives and processes a request from a client terminal, and detects country information and region information related to the request; a database unit that is connected to the server via a network, receives a query for the request from the server, and transmits a response to the query to the server, wherein the query may include a shard key being determined on the basis of the country information and region information related to the request, and the database unit may include a plurality of data nodes in which the query is distributed and processed on the basis of the shard key.

## Description

### [Technical Field]

The present invention relates to a data distributed processing technology, and more particularly, to a data sharding system capable of distributing and processing data, a data sharding method, and a program stored in a recording medium.

Further, the present invention relates to a distributed processing technology, and more particularly, to a code distribution processing server for distributing and processing codes representing service types, a code distribution processing method, and a program stored in a recording medium.

### [Background Art]

Due to the explosive increase in data in the recent business environment, advanced distributed database technology along with data distributed processing and storage technology is in the limelight. Among various data processing technologies, a sharding technology divides and processes a large amount of data, so it is possible to process a large amount of data by expanding a scale-out system using a low-cost system without introducing a high-performance system.

In the field of databases, the sharding refers to a method of physically distributing, storing, and inquiring data in different databases in a horizontally partitioned manner and means horizontal partitioning of one database having each individual partition called a shard. When performing the sharding, compared to managing one large database, each shard may receive more support from computing resources, it is possible to increase a data processing speed, and when a redundancy technology is applied, even if one shard fails, other shards may provide services, so it is possible to improve reliability and the like.

Meanwhile, in the case of accommodation reservation sites such as Hotels.com or Airbnb, information on services of providers such as hotels, resorts, and homestays around the world is provided. In the case of global reservation sites targeting the whole world, it is necessary to process a large amount of data. Users may reserve services of providers suitable for their desired accommodation styles using information provided on the accommodation reservation sites.

### [Disclosure]

### [Technical Problem]

Various methods of sharding a database may be used. To make sharding easier, partitioned database architecture, which automates sharding and load balancing across different shard store, has emerged. The architectures of the related art use key-based hash partitioning or range partitioning to allocate data to shard stores in distributed computing systems that store databases.

However, the problem of such key-based hash partitioning or range partitioning is that a calculation of a key-based hash in a large database system requires significant computational power and time, and therefore, a processing speed is slow when handling requests for data of such a key. In addition, when data is assigned to multiple shard stores, it is necessary to scan all shard stores or index data stored in all shard stores in order to check in which shard store query-related data is stored.

In addition, in the case of the accommodation reservation sites targeting the world, types of accommodation facilities legally or administratively defined in each region may be different. In addition, in the case of food information sites targeting the whole world, types of restaurants provided in each country and each region may be different, and in the case of beauty information sites targeting the whole world, types of beauty-related industries (hair, makeup, nails, etc.) provided in each country and each region may be different.

When service areas of information providing sites developed for a first country expand to a second country, since the service types of the first country and the second country are different, program codes used when developing sites for the first country may not be used without modifications. In this case, it was necessary to re-develop program codes for the second country from scratch or to utilize only some of the program codes of the site for the first country and to newly develop the rest.

The problem to be solved by the present invention is to solve the above-described problems of the related art, and the present invention provides a data sharding system capable of improving a data processing speed and easily finding a storage location of data to be searched without performing a separate data indexing operation, a data sharding method, and a program recorded on a recording medium.

Another problem to be solved by the present invention is to solve the above-described problems of the related art, and the present invention provides a code distribution processing server capable of facilitating global expansion of services and improving versatility of service expansion, a code distribution processing method, and a program recorded on a recording medium.

### [Technical Solution]

According to an embodiment of the present invention, a data sharding system includes: a server that receives and processes a request from a client terminal, and detects country information and region information related to the request; and a database unit that is connected to the server via a network, receives a query for the request from the server, and transmits a response to the query to the server, in which the query may include a shard key determined based on the country information and region information related to the request, and the database unit may include a plurality of data nodes in which the query is distributed and processed based on the shard key.

The database unit may further include a meta node that analyzes the query received from the server and distributes and processes the query to the plurality of data nodes based on the shard key, and the meta node may transmit a query to a data node corresponding to the shard key to acquire a response to the query.

The shard key may include an equipment code determined based on the country information and region information, and the server may include the country information, the region information, and a lookup table for a corresponding equipment code.

The server may detect the country information and region information based on IP address information of the client terminal or location information input by the client terminal.

The server may include: a region information detection unit that detects the country information and the region information related to the request received from the client terminal; an equipment code determination unit that determines the equipment code corresponding to the detected country information and the region information based on the lookup table; and a data transmission unit that transmits the query including the equipment code as the shard key to the database unit and transmits a response from the database unit to the client terminal.

Different equipment codes may be assigned to each country. The same equipment code may be assigned to a plurality of regions within the same country. Different equipment codes may be assigned to different regions within the same country.

According to another embodiment of the present invention, a data sharding method performed by a data sharding system including a server and a database unit includes: a region information detection operation in which the server receives a request from a client terminal and detects country information and region information related to the request; a query transmission operation in which the server transmits a query for the request to the database unit; and a distributed processing operation in which the database unit receives the query, analyzes the query, and distributes and processes data to a plurality of data nodes based on a shard key, in which the query may include a shard key determined based on the country information and region information related to the request, and the database unit may distribute and process the query to the plurality of data nodes based on the shard key.

According to still another embodiment of the present invention a program is stored in a recording medium to cause a computer to perform the data sharding method.

According to yet another embodiment of the present invention, a code distribution processing server is connected to a plurality of databases and processes a request from a client terminal, and the code distribution processing server may include: a location information detection unit that detects location information related to a request from a client terminal; an information acquisition unit that inquires information, which is related to a common service type code corresponding to a request from the client terminal, of a database in which data related to the location information is stored among a plurality of databases and acquires a plurality of first detailed service type codes related to the common service type code and a plurality of pieces of first detailed service type information related to the plurality of first detailed service type codes; and an information providing unit that provides the plurality of pieces of first detailed service type information to the client terminal.

In one embodiment, the information acquisition unit may inquire information related to the common service type code using a query that includes the common service type code and a country code corresponding to the location information.

In one embodiment, the plurality of databases may include detailed service information on a plurality of service providers and distribute and store detailed service information on the plurality of service providers based on a shard key determined based on country information included in the data.

In one embodiment, the common service type code may indicate a type of service provided by the service provider and may be equally assigned to all countries. The first detailed service type code may indicate a detailed service type of a service type related to the common service type code.

In one embodiment, the location information detection unit may detect country information related to a request from the client terminal based on IP address information of the client terminal or location information input by the client terminal.

In one embodiment, when the client terminal selects a specific first detailed service type from the plurality of pieces of first detailed service type information, the information acquisition unit may inquire information related to a first detailed service type code of a selected first detailed service type, and acquire a plurality of second detailed service type codes related to the selected first detailed service type and a plurality of pieces of second detailed service type information related to the plurality of second detailed service type codes, and the information providing unit may provide the plurality of pieces of second detailed service type information to the client terminal.

In one embodiment, the second detailed service type code may indicate a detailed service type of a service type related to the first detailed service type code.

According to yet another embodiment of the present invention, a code distribution processing method performed by a code distribution processing server is connected to a plurality of databases and processes a request from a client terminal, and the code distribution processing method may include: a location information detection operation of detecting location information related to a request from a client terminal; a first detailed information acquisition operation of inquiring information, which is related to a common service type code corresponding to the request from the client terminal from a database in which data related to the location information is stored, among a plurality of databases and acquiring a plurality of first detailed service type codes corresponding to the common service type code and a plurality of pieces of first detailed service type information related to the plurality of first detailed service type codes; and an information providing operation of providing the plurality of pieces of first detailed service type information to the client terminal.

According to yet another embodiment of the present invention, a program is stored in a recording medium to cause a computer to perform the code distribution processing method.

### [Advantageous Effects]

According to an embodiment of the present invention, by allowing a query to include a shard key determined based on country information and region information related to a request from a client terminal and the query to include a component distributed and processed to a plurality of data nodes based on the shard key, it is possible to provide a data sharding system capable of increasing a data processing speed and easily finding a storage location of data to be inquired without performing a separate data indexing operation, a data sharding method, and a program recorded on a recording medium.

According to an embodiment of the present invention, by detecting location information related to a request from a client terminal, inquiring information, which is related to a common service type code corresponding to the request from the client terminal, of a database in which data related to the detected location information is stored, and acquiring a plurality of first detailed service type codes related to a common service type code and a plurality of first detailed service type information related to the plurality of first detailed service type codes, it is possible to provide a code distribution processing server capable of facilitating global expansion of services and improving versatility of service expansion, a code distribution processing method, and a program recorded on a recording medium.

### [Description of Drawings]

FIG. 1 is a block diagram illustrating a configuration and network connection relationship of a data sharding system according to one embodiment of the present invention.
FIG. 2 is a block diagram illustrating a configuration of a server of the data sharding system according to one embodiment of the present invention.
FIG. 3 is a diagram illustrating a lookup table of the data sharding system according to one embodiment of the present invention.
FIG. 4A is a diagram illustrating a sharding algorithm based on a hash function, which is a data sharding method according to the related art.
FIG. 4B is a diagram for describing a key range-based sharding algorithm, which is the data sharding method according to the related art.
FIG. 4C is a diagram for describing a sharding algorithm according to one embodiment of the present invention.
FIG. 5 is a flowchart illustrating a process of a data sharding method performed by the data sharding system according to one embodiment of the present invention.
FIG. 6 is a block diagram illustrating a network connection relationship of a code distribution processing server according to one embodiment of the present invention.
FIG. 7 is a block diagram illustrating a configuration of the code distribution processing server according to one embodiment of the present invention.
FIG. 8 is a diagram illustrating a hierarchical relationship between code information and each code used in the code distribution processing server or database according to one embodiment of the present invention.
FIG. 9 is an example of a screen when a consumer accesses the code distribution processing server (60) according to one embodiment of the present invention.
FIG. 10 is a diagram illustrating an example of a screen displayed when a Korean user clicks a "food" menu or when a user from another country clicks the "food" menu and then inputs location information of Korea.
FIG. 11 is a diagram illustrating an example of a screen displayed when a Korean user clicks the "food" menu and then inputs location information of the United States, or when an American user clicks the "food" menu.
FIG. 12 is a flowchart of a code distribution processing method performed by a code distribution processing apparatus according to one embodiment of the present invention.

### [Best Mode]

Hereinafter, exemplary embodiments of the present invention will be described in detail with reference to the accompanying drawings.

General terms that are currently widely used are selected as terms used in the present invention in consideration of functions in the present invention but may be changed depending on the intention of those skilled in the art or a judicial precedent, the emergence of a new technique, and the like. In addition, in a specific case, terms arbitrarily chosen by an applicant may exist. In this case, the meaning of such terms will be described in detail in a corresponding description portion of the present disclosure. Therefore, the terms used in exemplary embodiments of the present disclosure should be defined on the basis of the meaning of the terms and the contents throughout the present disclosure rather than simple names of the terms.

Throughout the specification, unless otherwise specified, "including" any component means that other components may be further included rather than excluding other components. In addition, the terms "unit," "module," and the like described in the specification refer to a processing unit of at least one function or operation and may be implemented by hardware or software or a combination of hardware and software.

Hereinafter, embodiments of the present invention will be described in detail with reference to the accompanying drawings so that those skilled in the art to which the present invention pertains may easily practice the present invention. However, the present invention may be implemented in various different forms, and is not limited to embodiments described herein. In addition, in the drawings, portions unrelated to the description will be omitted to clearly describe the present disclosure, and similar portions will be denoted by similar reference numerals throughout the specification.

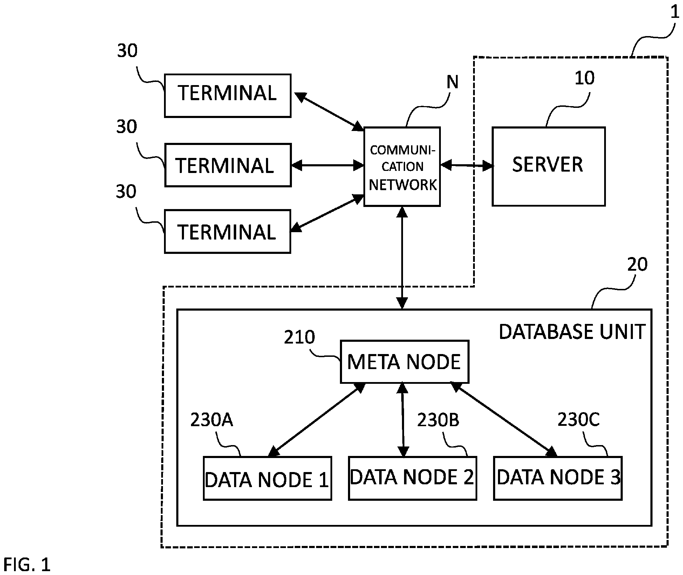

FIG. 1 is a block diagram illustrating a configuration and network connection relationship of a data sharding system 1 according to one embodiment of the present invention.

Referring to FIG. 1, the data sharding system 1 may include a server 10 and a database unit 20. The server 10, the database unit 20, and a plurality of terminals 30 are connected via a communication network N. The server 10, the database unit 20, and the plurality of client terminals 30 may transmit and receive data using the communication network N.

The network N means a connection structure capable of exchanging information between each node such as terminals and servers, and examples of such a network N include the Internet, a local area network (LAN), a wireless local area network (wireless LAN), a wide area network (WAN), a personal area network (PAN), 3G, 4G, long term evolution (LTE), wireless fidelity (WiFi), or the like, but are not limited thereto.

The client terminal 30 may be implemented as a computer capable of accessing a remote server or a terminal via the network N. Here, the computer may include, for example, a notebook, a desktop, a laptop, or the like. The client terminal 30 is a mobile communication device in which portability and mobility are secured, and examples thereof may include all types of handheld-based wireless communication devices such as a personal communication system (PCS), global system for mobile communication (GSM), personal digital cellular (PDC), a personal handyphone system (PHS), a personal digital assistant (PDA), international mobile telecommunication (IMT)-2000, code division multiple access (CDMA)-2000, W-code division multiple access (W-CDMA), a wireless broadband Internet (WiBro) terminal, a smart phone, a smart pad, a tablet PC, and the like.

The server 10 may receive and process a request from the client terminal 30 and detect country information and region information related to the request. In one embodiment, the server 10 may be a web application server, a web container, or a servlet container. The server 10 may provide a driving environment in which JSP or Servlet can be executed.

When the server 10 receives the request from the client terminal 30, the server 10 may load a servlet related to the request from the client terminal 30 into memory, and generate a thread for the servlet. The thread may call a service() method of the servlet, and the service() method can call a doGet() or doPost() method according to the request. The doGet() or doPost() method may directly deliver a dynamic page generated according to a factor to the client terminal 30 as a response or deliver the dynamic page to the client terminal 30 via a web server.

The server 10 may detect country information and region information based on IP address information of the client terminal 30 or location information input by the client terminal 30. When the client terminal 30 accesses the server 10, the server 10 may acquire IP address information of the client terminal 30. A registered address of the corresponding IP address may be detected from the IP address information, and country information and region (city) information accessed by the client terminal 30 may be identified from the detected address.

For example, when the client terminal 30 accesses the server 10, the location information input by the client terminal 30 may be identified from an address input to an address input field on a web page so that a user of the client terminal 30 makes accommodation reservation, food delivery, beauty service reservation, and the like, on the web page provided by the server 10. Alternatively, the user of the client terminal 30 may move or enlarge/reduce the map display screen on the web page to identify the location information from the displayed country and region.

The database unit 20 may receive a query for a request from the server 10 and transmit a response to the query to the server 10. The database unit 20 may include a meta node 210 and a plurality of data nodes 230A to 230C.

The query may include a shard key determined based on country information and region information related to a request from the server 10. A data node on which a query is executed may be determined based on the shard key.

The shard key may include a predetermined equipment code according to the country information and region information. The equipment code may be determined by a lookup table stored in the server 10, and the lookup table may be formed of a plurality of data sets including country code, region code, and equipment code indicating which regions of which countries are assigned to which equipment.

In the database unit 20, the query may be distributed based on the shard key and processed in the plurality of data nodes 230A to 230C. The meta node 210 may analyze a query received from the server 10 and distribute and process the query to a plurality of data nodes 230A to 230C based on the shard key. The meta node 210 may transmit a query to the data node 230 corresponding to the shard key to acquire the response to the query.

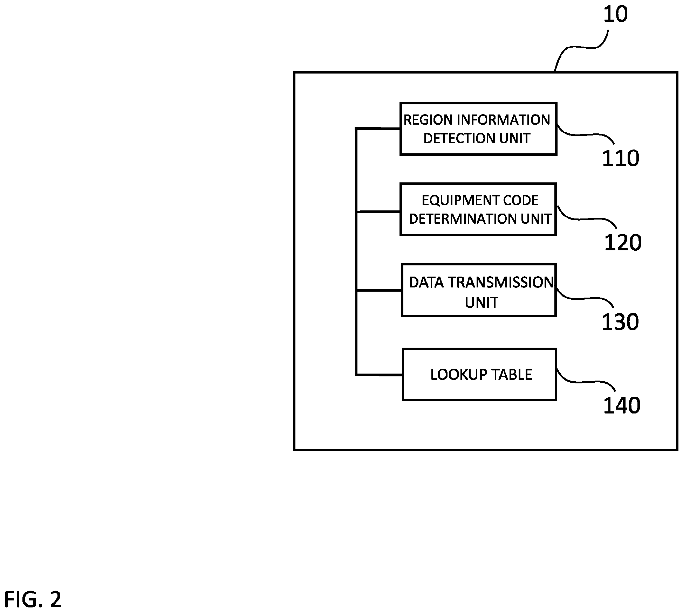

FIG. 2 is a block diagram illustrating a configuration of the server 10 of the data sharding system 1 according to one embodiment of the present invention.

Referring to FIG. 2, the server 10 may include a region information detection unit 110, an equipment code determination unit 120, a data transmission unit 130, and a lookup table 140.

The region information detection unit 100 may detect the country information and region information related to the request received from the client terminal 30. The country information and region information related to the received request may be detected from the IP address information of the client terminal 30 or the location information input by the client terminal 30.

When there is no clear location input from the client terminal 30 (for example, when accessing a web page for the first time), the region information detection unit 100 may detect the registered address of the corresponding IP address from the IP address information of the client terminal 30 and identify the country information and region (city) information accessed by the client terminal 30 from the detected address.

When there is the clear location input from the client terminal 30 (for example, when the user of the client terminal 30 inputs the address on the web page for making accommodation reservation, food delivery, beauty service reservation, and the like, on the web page provided by the server 10 or when the user of the client terminal 30 moves or enlarges/reduces the map display screen on the web page), the country information and region information may be identified from the location information input by the client terminal 30.

The equipment code determination unit 120 may determine the equipment codes corresponding to the detected country information and region information based on the lookup table 140. The lookup table 140 may include data representing a correspondence between country codes, country names, region codes, region names, and equipment codes.

The data transmission unit 130 may transmit a query including the equipment code as the shard key to the database unit 20 and transmit a response from the database unit 20 to the client terminal 30.

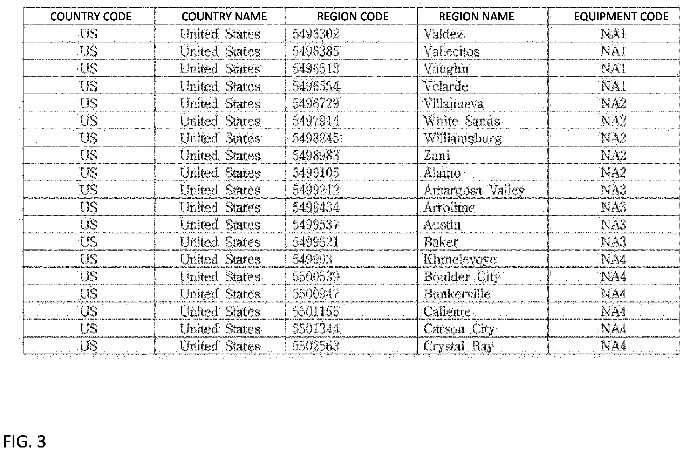

FIG. 3 is a diagram illustrating the lookup table of the data sharding system 1 according to one embodiment of the present invention.

Referring to FIG. 3, the lookup table may include a data set representing the correspondence between the country codes, the country names, the region codes, the region names, and the equipment codes. For example, when data related to the United States is distributed and stored in four data nodes, or queries related to the United States are distributed and executed on four data nodes, multiple regions of the United States may be integrated and single equipment may be responsible for the corresponding regions.

For example, data or queries related to Valdez, Vallecitos, Vaughn, and Velarde regions may be sharded to a data node corresponding to an equipment code NA1, data or queries related to Villanueva, White Sands, Williamsburg, Zuni, and Alamo regions may be sharded to a data node corresponding to an equipment code NA2, data or queries related to Amargosa Valley, Arrolime, Austin, and Baker regions may be sharded to a data node corresponding to an equipment code NA3, and data or queries related to Khmelevoye, Boulder City, Bunkerville, Caliente, Carson City, and Crystal Bay regions may be sharded to a data node corresponding to an equipment code NA4. In this way, the same equipment code may be assigned to multiple regions within the same country.

Alternatively, different equipment codes may be assigned to different regions (e.g., state range in the case of the United States or special city/metropolitan city/province range in the case of Korea) within the same country. In addition, different equipment codes may be assigned to each country.

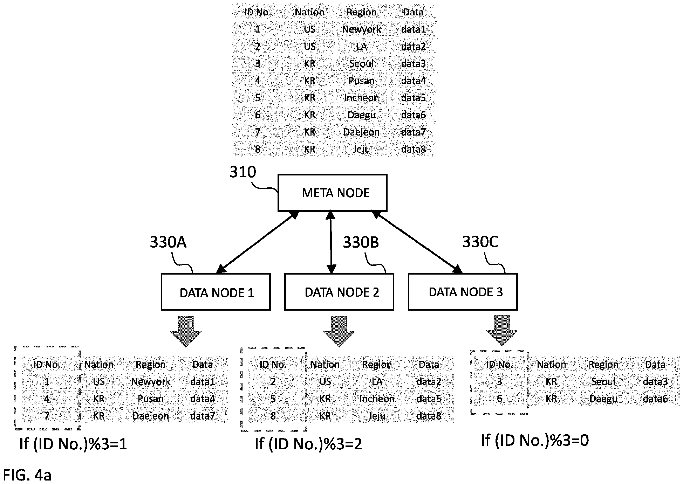

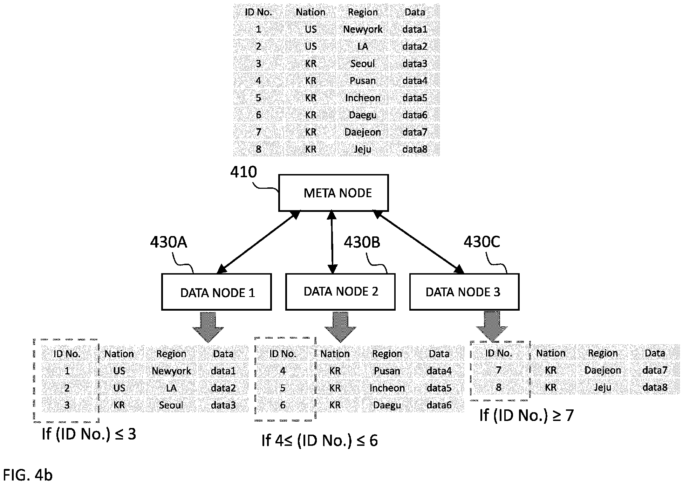

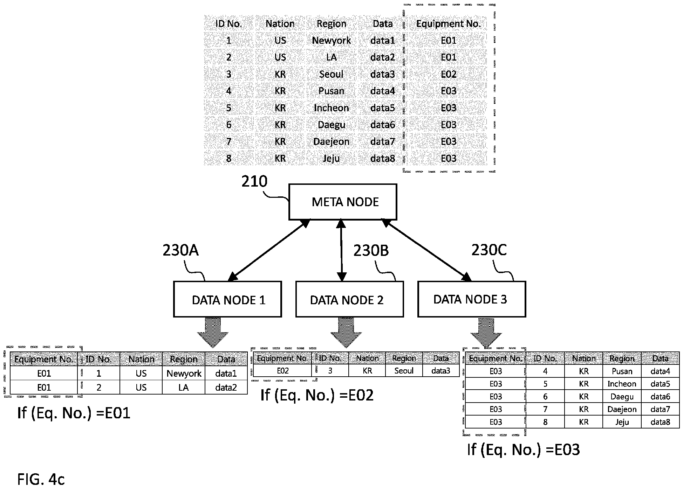

FIGS. 4A and 4B are diagrams for describing a data sharding method according to the related art, and FIG. 4C is a diagram for describing a data sharding method according to one embodiment of the present invention.

A hash function-based sharding algorithm, which is the data sharding method according to the related art, will be described with reference to FIG. 4A. When data sets from ID No. 1 to ID No. 8 are received by a meta node 310, the meta node 310 shards each data set to data node 1, data node 2, and data node 3 by a sharding function.

The sharding function of the meta node 310 uses ID No. as the shard key and when a value of "ID No.%3" (remainder when ID No. is divided by 3) is "1," the corresponding data is sharded to data node 1 330A. When the value of "ID No. %3" is "2," the corresponding data is sharded to data node 2 330B. When the value of "ID No. %3" is "0," the corresponding data is sharded to data node 3 330C.

According to the hash function-based sharding method, data corresponding to "ID No. 1," "ID No. 4," and "ID No. 7" is sharded to the data node 1 330A, data corresponding to "ID No. 2," "ID No. 5," and "ID No. 8" is sharded to the data node 2 330B, and data corresponding to "ID No. 3" and "ID No. 6" is sharded to the data node 3 330C.

According to the hash function-based sharding method, when trying to find data related to "data1" among the values of the data distributed and stored in the data nodes 330A to 330C, the meta node 310 needs to transmit a query to all the data nodes 330A to 330C and receive a response from the data node 1 330A having the "data1." In this case, there is a problem in that the data processing is delayed because the query needs to be transmitted to all the data nodes when inquiring about data or searching for data.

A key range-based sharding algorithm, which is a data sharding method of the related art, will be described with reference to FIG. 4B. When the data sets from ID No. 1 to ID No. 8 are received by a meta node 410, the meta node 410 shards each data set to the data node 1, the data node 2, and the data node 3 by the sharding function.

The sharding function of the meta node 410 uses ID No. as a shard key, and when the ID No. is 3 or less, the corresponding data is sharded to data node 1 430A. When the ID No. is 4 or more and 6 or less, the corresponding data is sharded to data node 2 430B. When the ID No. is 7 or more, the corresponding data is sharded to the data node 3 430C.

According to the key range-based sharding method, data from ID No. 1 to ID No. 3 are sharded to the data node 1 430A, the data from ID No. 4 to ID No. 6 are sharded to data node 2 430B, and data from ID No. 7 to ID No. 8 are sharded to the data node 3 430C.

According to the key range-based sharding method, when trying to find data related to "data1" among the values of the data distributed and stored in the data nodes 430A to 430C, the meta node 410 needs to transmit a query to all the data nodes 430A to 430C and receive a response from the data node 1 430A having the "data1." In this case, there is a problem in that the data processing is delayed because the query needs to be transmitted to all the data nodes when inquiring about data or searching for data.

Referring to FIG. 4C, as a sharding algorithm according to one embodiment of the present invention, a sharding algorithm in which an equipment code determined based on country and region information is used as a shard key will be described. When data sets from ID No. 1 to ID No. 8 are received by the meta node 210, the meta node 210 shards each data set to the data node 1 230A, the data node 2 230B, and the data node 3 230C by the sharding function.

All the data sets may include an equipment code (equipment No.). The number of equipment codes may be the same as the number of sharded data nodes. For example, in FIG. 4C, there are three data nodes 230A to 230C, and in this case, equipment codes assigned to each data may be E01, E02, and E03. The equipment code may be determined by a predetermined lookup table as described above with reference to FIG. 3.

The sharding function of the meta node 210 uses the equipment No. as the shard key, and when the equipment No. is E01, the corresponding data is sharded to the data node 1 230A. When the assigned equipment No. is E02, the corresponding data is sharded to the data node 2 230B. When the assigned equipment No. is E03, the corresponding data is sharded to the data node 3 230C.

According to the sharding method according to one embodiment of the present invention in which the equipment code determined based on the country and region information is used as the shard key, data from ID No. 1 to ID No. 2 are sharded to the data node 1 230A, data of ID No. 3 is sharded to the data node 2 230B, and data from ID No. 4 to the ID No. 8 are sharded to the data node 3 230C.

According to the sharding method according to one embodiment of the present invention, when trying to find data related to the "data1" among the data values distributed and stored in the data nodes 230A to 230C, the meta node 410 may transmit a query to the data node 230A corresponding to the equipment code E01 determined according to the country information and region information on the "data1" and receive a response to the data related to the "data1." In this case, there is no need to transmit a query to all the data nodes when inquiring about or searching for data, and a query may be directly requested to the data node in which the corresponding data is stored by the shard key determined according to the country information and region information related to the corresponding data, so delay in data processing may be reduced.

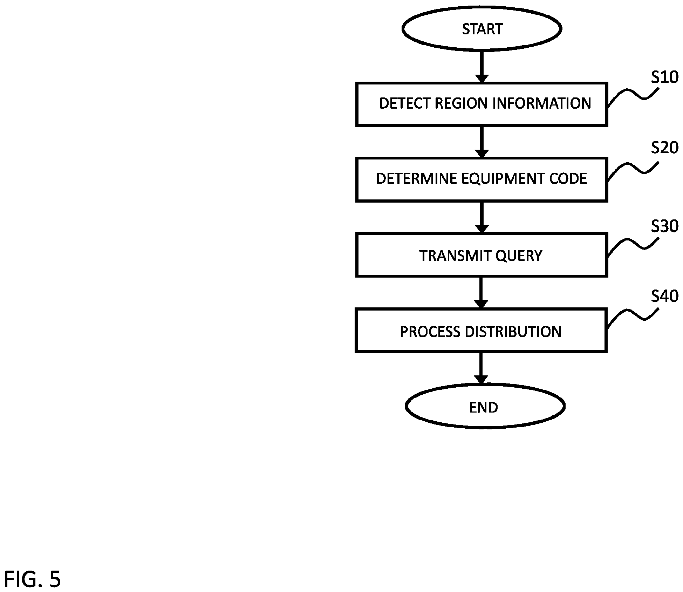

FIG. 5 is a flowchart illustrating a process of a data sharding method performed by the data sharding system 1 according to one embodiment of the present invention.

Referring to FIG. 5, the data sharding method performed by the data sharding system 1 may include a region information detection operation S10, an equipment code determination operation S20, a query transmission operation S30, and a distributed processing operation S40.

In the region information detection operation S10, the region information detection unit 110 of the server 10 may detect the country information and region information related to the request from the request received from the client terminal 30. The region information detection unit 110 may detect country information and region information based on IP address information of the client terminal 30 or location information input by the client terminal 30.

In the equipment code determination operation S20, the equipment code determination unit 120 may determine the equipment codes corresponding to the country information and region information based on the lookup table. The lookup table may include data representing a correspondence between country codes, country names, region codes, region names, and equipment codes.

In the query transmission operation S30, the data transmission unit 130 may transmit a query for the request from the client terminal 30 to the database unit 20. The data transmission unit 130 may transmit a query including the equipment code determined by the equipment code determination unit 120 as the shard key to the database unit 20.

In the distributed processing operation S40, the database unit 20 may receive a query received from the server 10, analyze the received query, and distribute and process data to a plurality of data nodes based on the shard key.

According to the data sharding method according to one embodiment of the present invention, a query may include the shard key determined based on the country information and region information related to the request from the client terminal, and a query is distributed and processed to a plurality of data nodes based on the shard key, and thus the data processing speed can be improved, and a storage location of data to be inquired may be easily found without performing a separate data indexing operation.

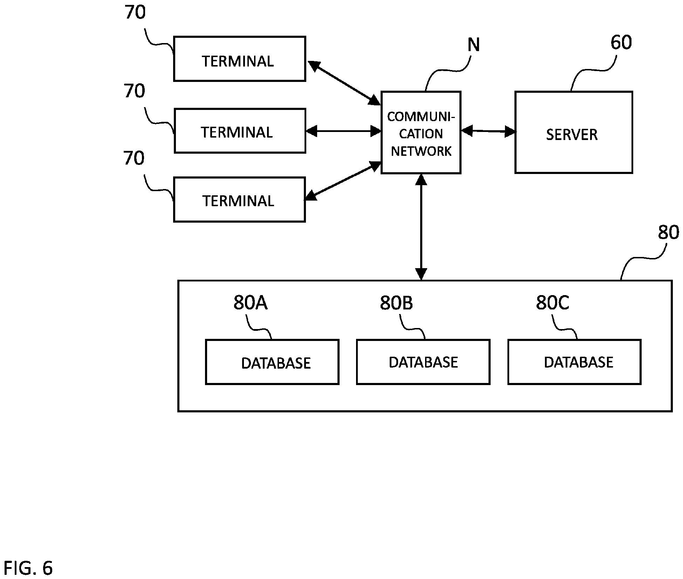

FIG. 6 is a block diagram illustrating a network connection relationship of a code distribution processing server 60 according to one embodiment of the present invention.

Referring to FIG. 6, the code distribution processing server 60 may be connected to a plurality of client terminals 70 and a plurality of databases 80 (80A, 80B, and 80C) via a communication network N. For the code distribution processing server 60, reference may be made to the description of the server 10 illustrated in FIG. 1 when it is not contradictory, and for the database 80, reference may be made to the description of the database unit 20 illustrated in FIG. 1 when it is not contradictory.

The code distribution processing server 60 may receive and process a request from the client terminal 70, transmit a request-related query to the database 80A, 80B, or 80C related to the request from the client terminal 70 among the plurality of databases 80, and acquire a query execution result and provide the acquired query execution result to the client terminal 70.

The code distribution processing server 60 may provide information on a plurality of services provided by a provider to a user accessing the server through the client terminal 70. In one embodiment, the code distribution processing server 60 may provide provider information and service information related to accommodation, food, and beauty. A user may access the code distribution processing server 60, inquire about accommodation, food, beauty services, and the like of a country desired to use, and make a reservation or purchase of the inquired services.

The plurality of databases 80 (80A, 80B, and 80C) may store service information related to the service provided by the provider, provider's personal information (account, transaction information, contact information, etc.), and customer's personal information (account, transaction information, contact information, etc.). The service information and the provider's or customer's personal information may include country information, region information, and language information. Hereinafter, reference numeral 80 is used to indicate the plurality of databases as a whole, and reference numerals 80A, 80B, and 80C are used to indicate individual databases.

In one embodiment, the service information, the provider's personal information, the consumer's personal information, and the like may be distributed and stored in each database 80A, 80B, and 80C based on the shard key determined based on the country information included in each piece of information. In another embodiment, the service information, the provider's personal information, the consumer's personal information, and the like may be distributed and stored in each database 80A, 80B, and 80C based on the shard key determined based on the country information and region information. For the method of distributing and storing data in each database 80A, 80B, and 80C based on the shard key determined based on the country information and region information, reference may be made to the description of the data distribution method described with reference to FIG. 4C.

For example, the database 80A may store service information about Korea, provider's personal information, customer's personal information, and the like, the database 80B may store service information about the United States, provider's personal information, customer's personal information, and the like, and the database 80C may store service information about Japan, provider's personal information, customer's personal information, and the like.

A data table of the database 80A in which Korea-related data is stored may include country information of Korea and specific region information (Seoul, Gyeonggi, etc.) related to corresponding services, and the like. A data table of the database 80B in which US-related data is stored may include country information of the United States and specific region information (New York, Chicago, etc.) related to corresponding services, and the like.

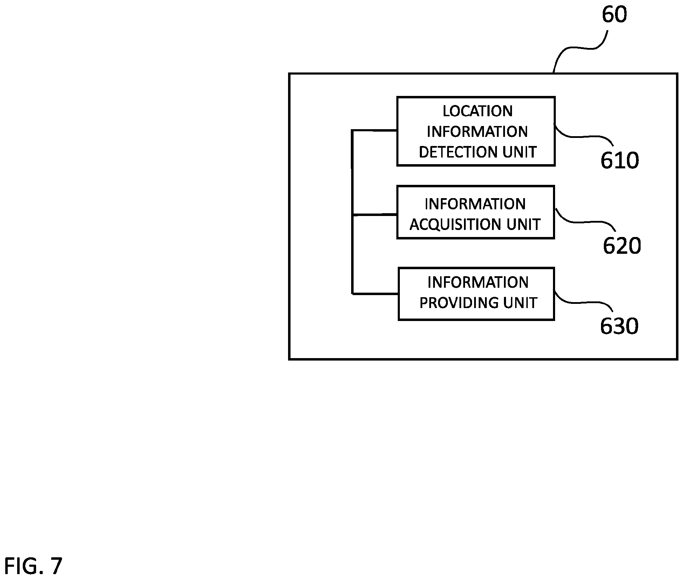

FIG. 7 is a block diagram illustrating a configuration of the code distribution processing server 60 according to one embodiment of the present invention.

Referring to FIG. 7, the code distribution processing server 60 may include a location information detection unit 610, an information acquisition unit 620, and an information providing unit 630. The code distribution processing server 60 may process the request from the client terminal 70 by the location information detection unit 610, the information acquisition unit 620, and the information providing unit 630, and transmit the request-related data to the client terminal 70.

The location information detection unit 610 may detect the location information related to the request from the client terminal 70. The location information detection unit 610 may detect the country information based on the IP address information to which the client terminal 70 is connected or the location information input by the client terminal 70.

Upon receiving a request (service inquiry, search, browsing, etc.) from the client terminal 70, the location information detection unit 610 may detect the location information related to the request from the client terminal 70. The code distribution processing server 60 may detect the location information to inquire the information corresponding to the request of the database 80A, 80B, or 80C storing the data related to the detected location information among the plurality of databases 80.

The information acquisition unit 620 may inquire information, which is related to a common service type code corresponding to the request from the client terminal 70, of the database 80A, 80B, or 80C storing data related to the detected location information among the plurality of databases 80. The information acquisition unit 620 may acquire a plurality of first detailed service type codes related to a common service type code and a plurality of pieces of first detailed service type information related to a plurality of first detailed service type codes from the database 80A, 80B, or 80C in which the data related to the detected location information is stored.

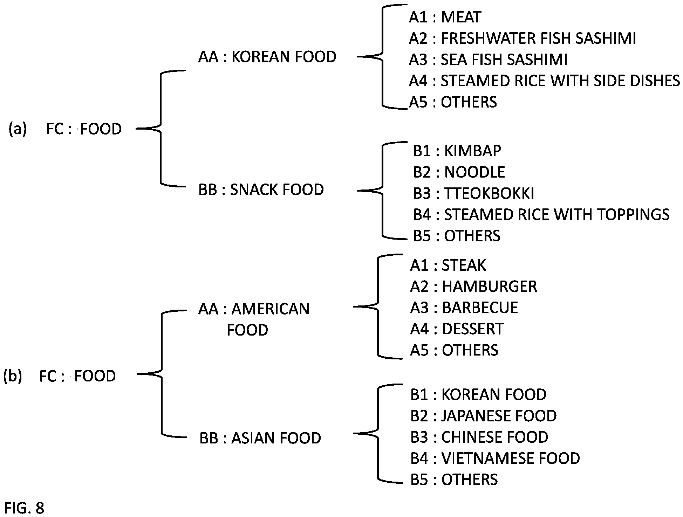

FIG. 8 is a diagram illustrating a hierarchical relationship between code information and each code used in the code distribution processing server 60 or the database 80 according to one embodiment of the present invention. FIG. 8A illustrates code information stored in the database 80A related to the Korea, and FIG. 8B illustrates code information stored in the database 80B related to the United States.

Referring to FIG. 8, a common service type code commonly assigned to all countries for food service is "FC." The common service type code may indicate a type of services provided by service providers. In another embodiment, a common service type code commonly assigned to all countries for accommodation services may be "AC," and a common service type code commonly assigned to all countries for beauty services may be "BC." By the configuration of inquiring the data stored in the databases 80A, 80B, and 80C, in which country-specific data is stored, by using a common service type code common to all countries, it is possible to write programming codes commonly applicable to all countries when developing web services or mobile application services, so costs and manpower required for global expansion of web services and mobile application services may be reduced.

Referring to FIG. 8A, in Korean code information, there are first detailed service types of "AA" and "BB" related to the common service type code "FC." The first detailed service type code indicating "Korean food" may be set to "AA" and the first detailed service type code indicating "snack food" may be set to "BB."

In addition, the second detailed service type related to the first detailed service type "Korean food" may be set to meat A1, freshwater fish sashimi A2, sea fish sashimi A3, steamed rice with side dishes A4, and others A5, and the second detailed service type related to the other first detailed service type "snack food" may be set to gimbap B 1, noodle B2, tteokbokki B3, steamed rice with toppings B4, and others B5.

Referring to FIG. 8B, in US code information, there are the first detailed service types of "AA" and "BB" related to the common service type code "FC." The first detailed service type code indicating "US food" may be set to "AA" and the second detailed service type code indicating "Asian food" may be set to "BB."

In addition, the second detailed service type related to the first detailed service type "US food" may be set to steak A1, hamburger A2, barbecue A3, dessert A4, and others A5, and the second detailed service type related to the other first detailed service type "Asian food" may be set to Korean food B1, Japanese food B2, Chinese food B3, Vietnamese food B4, and others B5.

In the code information illustrated in FIG. 8, the same detailed service type code is used for different detailed service types in Korea and the United States, but in other embodiments, different service type codes may be used for different detailed service types. Such an embodiment may also be included within the scope of the technical spirit of the present invention.

Referring back to FIG. 7, the information acquisition unit 620 may inquire the information, which is related to the common service type code corresponding to the request from the client terminal 70, of the database 80. The information acquisition unit 620 may inquire the information related to the common service type code using the query that includes the common service type code and the country code corresponding to the location information. The information acquisition unit 620 may acquire the plurality of first detailed service type codes related to the common service type code and the plurality of pieces of related first detailed service type information from the database 80.

In one embodiment, when there is an inquiry request for Korean food service from the client terminal 70, the information acquisition unit 620 may inquire the food service request of the database 80A in which data related to Korea is stored. For example, when the common service type code related to the food service request is "FC," the information acquisition unit 620 may inquire the information related to the common service type code "FC" of the database 80A to acquire the first detailed service type codes AA and BB related to the "FC" and the information (provider service information related to AA and BB, etc.) related to the first detailed service type code.

In another embodiment, when the code distribution processing server 60 transmits a query for a food service request to the database 80 without transmitting a query for the request to the individual databases 80A, 80B, and 80C, the meta node (not illustrated) in the database 80 may execute a query in the database 80A, 80B or 80C corresponding to the country information related to the request, and the information acquisition unit 620 may acquire query execution results from the database 80.

In one embodiment, when there is an inquiry request for US food service from the client terminal 70, the information acquisition unit 620 may inquire the food service request of the database 80B in which data related to the United States is stored. For example, when the common service type code related to the food service request is "FC," the information acquisition unit 620 may inquire the information related to the common service type code "FC" of the database 80B, and acquire the first detailed service type codes AA and BB related to the "FC" and the information (provider service information related to AA and BB, etc.) related to the first detailed service type code from the database 80B.

When the client terminal selects a specific first detailed service type from the plurality of pieces of first detailed service type information, the information acquisition unit 620 may inquire the information related to the first detailed service type code of the selected first detailed service type, and acquire the plurality of second detailed service type codes related to the selected first detailed service type and the plurality of pieces of second detailed service type information related to the plurality of second detailed service type codes. The information acquisition unit 620 may inquire the selected first detailed service type code and the related information using the query including the country code and the first detailed service type code of the selected first detailed service type.

In one embodiment, after the provider's service information related to the Korean food AA and the snack food BB is provided to the client terminal 70, when a consumer selects the Korean food AA from among the Korean food AA and the snack food BB which are the first detailed service types, the information acquisition unit 620 may inquire the information, which is related to the first detailed service type code "AA" of the selected first detailed service type ("Korean food"), of the database 80A and acquire the second detailed service type code related to the selected first detailed service type ("Korean food") and the related information (A1: meat, A2: freshwater fish sashimi, A3: sea fish sashimi, A4: steamed rice with side dishes, A5: others, and provider's service information related to A1 to A5).

In one embodiment, after the provider's service information related to the US food AA and the Asian food BB is provided to the client terminal 70, when the consumer selects the US food AA from among the US food AA and the Asian food BB which are the first detailed service types, the information acquisition unit 620 may inquire the information, which is related to the first detailed service type code "AA" of the selected first detailed service type ("US food"), of the database 80B and acquire the second detailed service type code related to the selected first detailed service type ("US food") and the related information (A1: steak, A2: hamburger, A3: barbecue, A4: dessert, A5: others, and provider's service information related to A1 to A5).

The information providing unit 630 provides the first detailed service type information or the second detailed service type information inquired and acquired by the information acquisition unit 620 to the client terminal 70 according to the request from the client terminal 70.

In one embodiment, when there is a query request for Korean food service from the client terminal 70, the first detailed service type codes AA and BB related to the common service type code "FC" acquired by the information acquisition unit 620 and the information (Korean provider's service information and the like related to AA and BB) related to the first detailed service type code may be provided to the client terminal 70.

In addition, when the "Korean food" is selected from among the Korean food services by the client terminal 70, the second service type code and the second detailed service type information (meat A1, freshwater fish sashimi A2, sea fish sashimi A3, steamed rice with side dishes A4, and others A5, and related provider's service information) related to the "Korean food" acquired by the information acquisition unit 620 may be provided to the client terminal 70.

In one embodiment, when there is a query request for US food service from the client terminal 70, the first detailed service type codes AA and BB related to the common service type code "FC" acquired by the information acquisition unit 620 and the information (US provider's service information and the like related to AA and BB) related to the first detailed service type code may be provided to the client terminal 70.

In addition, when the "US food" is selected from among the US food services by the client terminal 70, the second service type code and the second detailed service type information (steak A1, hamburger A2, barbecue A3, dessert A4, and others A5, and related provider's service information) related to the "US food" acquired by the information acquisition unit 620 may be provided to the client terminal 70.

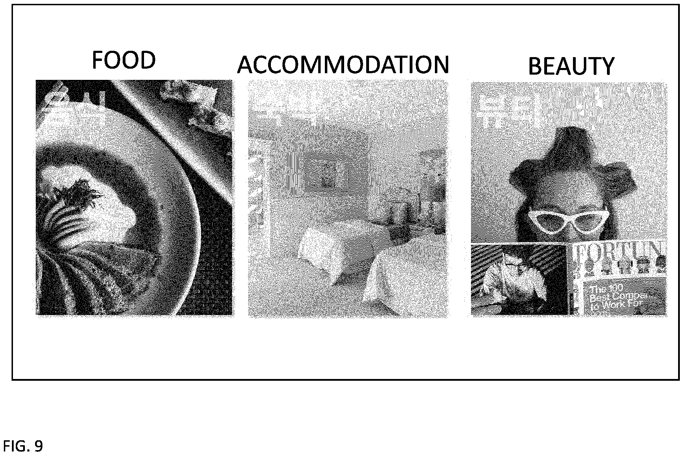

FIG. 9 is an example of a screen when a consumer accesses a code distribution processing server 60 according to one embodiment of the present invention.

Referring to FIG. 9, when a user accesses the code distribution processing server 60 via a web page or a mobile application, the code distribution processing server 60 may display a menu indicating the type of provided services. In the embodiment of FIG. 9, the code distribution processing server 60 may provide information on food, accommodation, and beauty services.

For example, when the "food" menu is clicked, service information of any food-related service providers such as franchise restaurants, non-franchise restaurants, cafes, Korean food, and Chinese food may be displayed. When the "accommodation" menu is clicked, service information of any accommodation-related service provider, such as hotel, guest house, and hostel, may be displayed. When the "beauty" menu is clicked, service information of any beauty-related service provider, such as hair, makeup, massage, and nail, may be displayed.

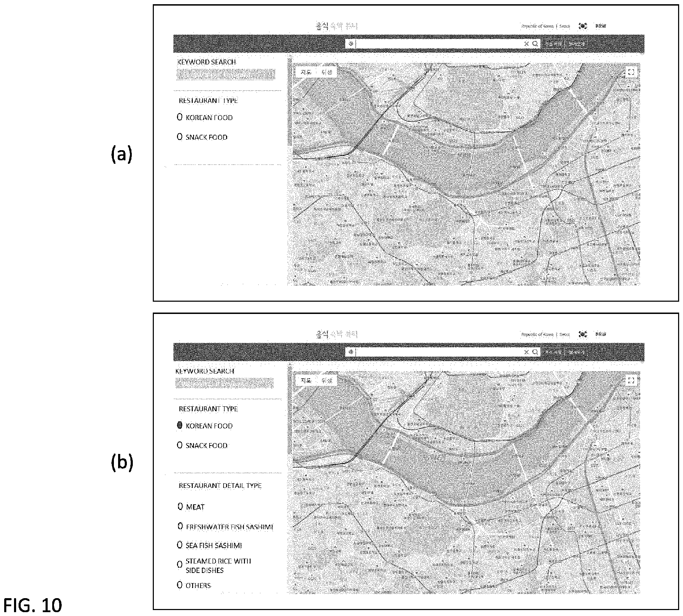

FIG. 10 is a diagram illustrating an example of a screen displayed when a Korean user clicks a "food" menu or when a user from another country clicks the "food" menu and then inputs location information of Korea.

When a Korean user clicks a "food" menu or when a user from another country clicks a "food" menu and then inputs location information of Korea, the code distribution processing server 60 may inquire information related to a common service type code FC for "food" of the database 80A related to Korea. In the database 80A related to Korea, a query including a common service type code and country information is executed, and a first detailed service type code related to food and the related first detailed service type information (provider's service information related to AA: Korean food, BB: snack food) may be provided to the terminal 70 of the Korean user. As illustrated in FIG. 10A, the screen of the terminal 70 may display map data near an access location, Korean food and snack food as types of restaurants, provider's service information (not illustrated) related thereto, and the like. In this case, the provided service information may be limited to the provider's service information displayed on the map data near the access location.

In addition, when a Korean user selects the Korean food among the types of restaurants, the code distribution processing server 60 may inquire the information related to the "Korean food" of the database 80A related to Korea. In the database 80A related to Korea, a query including the first detailed service type code "AA" and country information related to "Korean food" is executed, and the second detailed service type code related to "Korean food" and the related second detailed service type information (provider's service information related to meat: A1, freshwater fish sashimi: A2, sea fish sashimi: A3, steamed rice with side dishes: A4, and others: A5) may be provided to the terminal 70 of the Korean user.

As illustrated in FIG. 10B, the screen of the terminal 70 may display map data near an access location, meat, freshwater fish sashimi, sea fish sashimi, steamed rice with side dishes, others, provider's service information (not illustrated) related thereto, and the like. In this case, the provided service information may be limited to the provider's service information displayed on the map data near the access location.

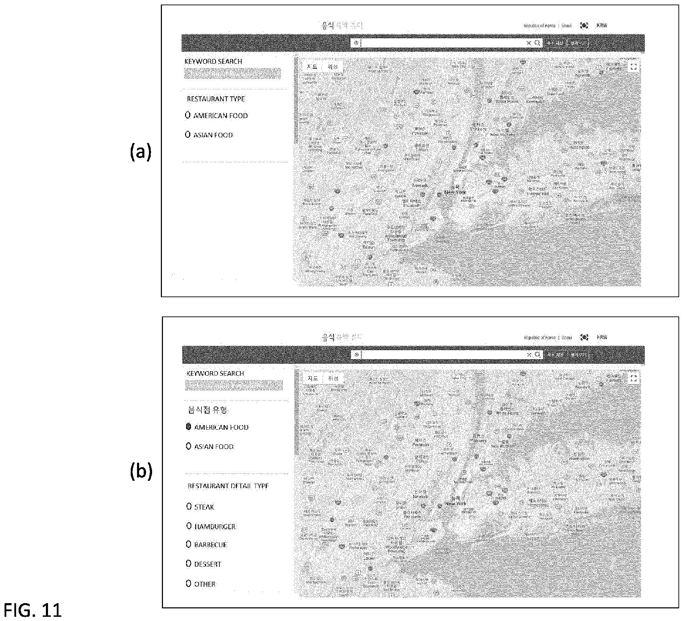

FIG. 11 is a diagram illustrating an example of a screen displayed when a Korean user clicks the "food" menu and then inputs location information of the United States, or when an American user clicks the "food" menu.

When a Korean user clicks the "food" menu and then inputs the location information of the United States, or when an American user clicks the "food" menu, the code distribution processing server 60 may inquire the information related to the common service type code FC for "food" of the database 80B related to the United States. In the database 80B related to the United States, a query including a common service type code and country information is executed, and a first detailed service type code related to food and the related first detailed service type information (provider's service information related to AA: US food, BB: Asian food) may be provided to the terminal 70 of the American user. As illustrated in FIG. 11A, the screen of the terminal 70 may display map data near an access location, US food and Asian food as the types of restaurants, provider's service information (not illustrated) related thereto, and the like. In this case, the provided service information may be limited to the provider's service information displayed on the map data near the access location.

In addition, when the American user selects the US food among the types of restaurants, the code distribution processing server 60 may inquire the information related to the "US food" of the database 80B related to the United States. In the database 80B related to the United States, a query including the first detailed service type code "AA" and country information related to "US food" is executed, and the second detailed service type code related to "US food" and the related second detailed service type information (provider's service information related to steak: A1, hamburger: A2, barbecue: A3, dessert: A4, and others: A5) may be provided to the terminal 70 of the American user.

As illustrated in FIG. 11B, the screen of the terminal 70 may display map data near an access location, steak, hamburger, barbecue, dessert, others, provider's service information (not illustrated) related thereto, and the like. In this case, the provided service information may be limited to the provider's service information displayed on the map data near the access location.

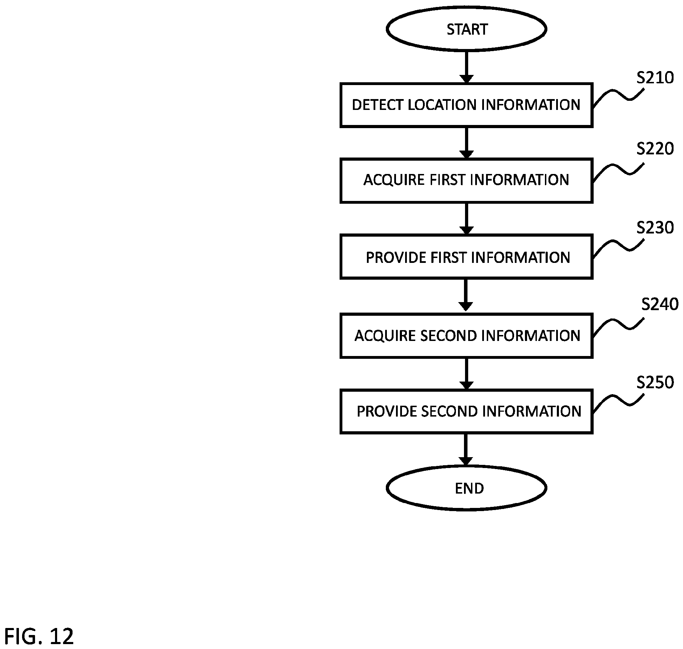

FIG. 12 is a flowchart of a code distribution processing method performed by the code distribution processing apparatus 60 according to one embodiment of the present invention.

Referring to FIG. 12, the code distribution processing method may include a location information detection operation S210, a first information acquisition operation S220, a first information providing operation S230, a second information acquisition operation S240, and a second information providing operation S250. In the location information detection operation S210, the location information detection unit 610 of the code distribution processing server 60 may detect the location information related to the request from the client terminal 70.

In the first information acquisition operation S220, the information acquisition unit 620 of the code distribution processing server 60 may inquire information, which is related to a common service type code corresponding to the request from the client terminal 70, of the database 80A, 80B, or 80C in which the data related to the location information is stored among a plurality of databases 80, and acquire a plurality of first detailed service type codes corresponding to the common service type code and a plurality of pieces of first detailed service type information related to the plurality of first detailed service type codes.

In the first information providing operation S230, the information providing unit 630 of the code distribution processing server 60 may provide the plurality of pieces of first detailed service type information acquired by the information acquisition unit 620 to the client terminal 70.

In the second information acquisition operation S240, the information acquisition unit 620 of the code distribution processing server 60 may acquire information related to the first detailed service type code of the selected first detailed service type, and acquire the plurality of second detailed service type codes related to the selected first detailed service type and the plurality of pieces of second detailed service type information related to the plurality of second detailed service type codes.

In the second information providing operation S250, the information providing unit 630 of the code distribution processing server 60 may provide the plurality of pieces of second detailed service type information acquired by the information acquisition unit 620 to the client terminal 70.

According to one embodiment of the present invention as described above, by detecting the location information related to the request from the client terminal, inquiring the information, which is related to the common service type code corresponding to the request from the client terminal, of the database in which the data related to the detected location information is stored, and acquiring the plurality of first detailed service type codes related to the common service type code and the plurality of pieces of first detailed service type information related to the plurality of first detailed service type codes, it is possible to facilitate global expansion of services and improve versatility of service expansion.

The operations or processors described hereinabove may be implemented by hardware components, software components, and/or combinations of hardware components and software components. For example, the operations or processors described in the embodiments may be executed using one or more general purpose computers or special purpose computers such as a processor, a controller, an arithmetic logic unit (AUL), a digital signal processor, a microcomputer, a field programmable array (FPA), a programmable logic unit (PLU), a microprocessor, or any other devices that may execute instructions and respond to the instructions. A processing device may execute an operating system (OS) and one or more software applications executed on the operating system. In addition, the processing device may access, store, manipulate, process, and create data in response to execution of software. Although a case in which one processing device is used is described for convenience of understanding, it may be recognized by those skilled in the art that the process device may include a plurality of processing elements and/or plural types of processing elements. For example, the processing device may include a plurality of processors or one processor and one controller. In addition, other processing configurations such as parallel processors are also possible.

The software may include computer programs, codes, instructions, or a combination of one or more thereof, and may configure the processing device to be operated as desired or independently or collectively command the processing device to be operated as desired. The software and/or the data may be permanently or temporarily embodied in any type of machine, component, physical device, virtual equipment, computer storage medium or device, or transmitted signal wave to be interpreted by the processing device or provide instructions or data to the processing device. The software may be distributed on computer systems connected to each other by a network to be thus stored or executed by a distributed method. The software and the data may be stored in one or more computer-readable recording media.

The methods according to the embodiment may be implemented in the form of program commands that may be executed through various computer means and may be recorded on a computer-readable recording medium. The computer-readable recording medium may include a program instruction, a data file, a data structure, or the like, alone or a combination thereof. The program commands recorded on the computer-readable recording medium may be especially designed and configured for the embodiments or be known to those skilled in the art. Examples of the computer-readable recording medium may include a magnetic medium such as a hard disk, a floppy disk, or a magnetic tape; an optical medium such as a compact disk read only memory (CD-ROM) or a digital versatile disk (DVD); a magneto-optical medium such as a floptical disk; and a hardware device specially configured to store and execute program commands, such as a ROM, a random access memory (RAM), a flash memory, or the like. Examples of the program commands include a high-level language code capable of being executed by a computer using an interpreter, or the like, as well as a machine language code made by a compiler. The abovementioned hardware device may be constituted to be operated as one or more software modules to perform the operations of the embodiments, and vice versa.

As described above, although limited embodiments have been described with drawings, various modifications and alternations are possible by those of ordinary skill in the art from the above description. For example, even when the described techniques may be performed in a different order than the described method, and/or components of the described systems, structures, devices, circuits, etc., may be combined or combined in a different manner than the described method, or replaced or substituted by other components, appropriate results may be achieved.

Therefore, other implementations, other embodiments, and equivalents of the claims are within the scope of the following claims.

## Claims

1. A data sharding system comprising:
a server that receives and processes a request from a client terminal and detects country information and region information related to the request; and
a database unit that is connected to the server via a network, receives a query for the request from the server, and transmits a response to the query to the server,
wherein the query includes a shard key determined based on the country information and region information related to the request, and
the database unit includes a plurality of data nodes in which the query is distributed and processed based on the shard key.

2. The data sharding system of claim 1, wherein the database unit further includes a meta node that analyzes the query received from the server and distributes and processes the query to the plurality of data nodes based on the shard key, and
the meta node transmits the query to a data node corresponding to the shard key to acquire a response to the query.

3. The data sharding system of claim 1, wherein the shard key includes an equipment code determined based on the country information and the region information, and
the server includes the country information, the region information, and a lookup table for a corresponding equipment code.

4. The data sharding system of claim 1, wherein the server detects the country information and the region information based on IP address information of the client terminal or location information input by the client terminal.

5. The data sharding system of claim 3, wherein the server includes:
a region information detection unit that detects the country information and the region information related to the request received from the client terminal;
an equipment code determination unit that determines the equipment code corresponding to the detected country information and the region information based on the lookup table; and
a data transmission unit that transmits the query including the equipment code as the shard key to the database unit and transmits a response from the database unit to the client terminal.

6. The data sharding system of claim 3, wherein different equipment codes are assigned to each country.

7. The data sharding system of claim 3, wherein the same equipment code is assigned to a plurality of regions within the same country.

8. The data sharding system of claim 3, wherein different equipment codes are assigned to different regions within the same country.

9. A data sharding method performed by a data sharding system including a server and a database unit, the data sharding method comprising:
a region information detection operation in which the server receives a request from a client terminal and detects country information and region information related to the request;
a query transmission operation in which the server transmits a query for the request to the database unit; and
a distributed processing operation in which the database unit receives the query, analyzes the query, and distributes and processes data to a plurality of data nodes based on a shard key,
wherein the query includes a shard key determined based on the country information and the region information related to the request, and
the database unit distributes and processes the query to the plurality of data nodes based on the shard key.

10. A program stored in a recording medium to cause a computer to perform the data sharding method of claim 9.
